# EUROPEAN PATENT SPECIFICATION

(11) **EP 2 720 423 B1**
(45) Date of publication and mention of the grant of the patent: **16.12.2015**
(21) Application number: 12306257.2
(22) Date of filing: 12.10.2012
(51) Int. Cl.: H04L 12/933

(54) **Multistage switching system with a physical ring structure**
Mehrstufiges Vermittlungssystem mit physikalischer Ringstruktur
Système de communication a plusieur étages avec une structure d'anneau physique

(43) Date of publication of application: 16.04.2014
(73) Proprietor: ALCATEL LUCENT, 92100 Boulogne-Billancourt (FR)
(72) Inventor: Löhr, Jürgen, 70190 Stuttgart (DE)
(74) Representative: Wetzel, Emmanuelle

(56) References cited:
- WO-A1-00/52889
- US-A1- 2004 042 448

## Description

This document relates to a communication system comprising a plurality of IO nodes and a plurality of center stage nodes, wherein each center stage node is logically connected to each IO node and each IO node is logically connected to each center stage node.

A particular, but non-exhaustive, application of the invention lies in big cell-switched systems supporting packet and/or TDM switching that are typically built out of a plurality of m IO nodes, each node having an IO interface and an input stage, and a plurality of n center stage nodes, wherein m and n denote nonzero integers. An IO interface as denoted in this invention may comprise one or several IO ports, e.g. Ethernet interfaces or STM-n interfaces. The term IO interface denotes this set of physical IO ports and refers to the total combined bandwidth implemented by this set of IO ports. The plurality of input stages are configured to allocate traffic arriving from an IO interface to multiplexing entities and to generate traffic outgoing via the IO interfaces from received multiplexing entities. The IO nodes may be implemented as IO cards containing line termination, traffic processing, and fabric adaptation in order to transform traffic into multiplexing units towards center stage nodes and reassembling traffic out of cells received from the center stage nodes. Center stage nodes, e.g. implemented on a switch card, each may contain 1 to several switch elements that switch cells received from IO cards, and sending them to IO cards after switching.

To achieve non-blocking connectivity between input stages and center stage nodes, there is a need to fully mesh each input state to each center stage node, resulting in m*n bidirectional connections, wherein all traffic entering the system through one of the IO nodes is routed through at least one of the center stage nodes before leaving the system through one of the IO nodes.

In a single-shelf system, this complexity is typically implemented in an electrical backplane, providing the m*n connections. The complexity of the m*n connections is confined and hidden within a single component, i.e., the backplane.

However, in multi-shelf systems, IO nodes and center stage nodes are distributed over several physical shelves, resulting in many cable connections between the shelves to implement the full m*n mesh. Typical implementations of such an interconnection scheme use optical interconnect cables, resulting in mechanical issues due to the high number of cables and cabling space needed on the front of cards within a shelf for connectors of optical interconnect cables. Furthermore, cabling the m*n connections separately is time-consuming and error-prone.

WO 00/52889 A1 discloses a packet switching fabric having a segmented ring with token based resource control protocol and output queuing control.

US 2004/042448 A1 discloses a multi-port high-speed serial fabric interconnect chip in a meshed configuration.

In view of the above problems of the prior art, there is a need to provide a communication system that allows less complex installation and more compact implementation of a full bidirectional mesh between a plurality of m IO nodes and a plurality of n center stage nodes. There is a further need to provide a less error-prone method for connecting shelves in a communication system, the communication system comprising a plurality of IO nodes and a plurality of center stage nodes.

In accordance with an aspect of the invention, a communication system comprising of a plurality of m IO nodes is proposed, each node having an IO interface and an input stage. The plurality of input stages are configured to allocate traffic arriving from an IO interface of an IO node to multiplexing entities and to generate outgoing traffic from received multiplexing entities via the IO interfaces of the IO node.

The system further comprises a plurality of n center stage nodes for switching data received via multiplexing entities. Each center stage node is logically connected to each input stage and each input stage is logically connected to each center stage node, resulting in m*n bidirectional logical connections. All traffic entering the system through one of the IO nodes is routed through one or several of the center stage nodes before leaving the system through one of the IO nodes. The center stages may be (but do not have to be) controlled by a control instance with visibility over all nodes attached to the ring. The communication system may be one of a cell-switched system, a packet-switched system or a TDM switched system, or any combination thereof.

The system further comprises a physical ring structure, wherein the plurality of input stages and the plurality of center stages are connected to the physical ring structure. At least some of the m*n bidirectional logical connections are mapped onto the physical ring structure, so that at least some of the multiplexing entities transmitted between one of the input stages and one of the center stage nodes are transmitted over the physical ring structure. The term "ring" refers to the layout of the cables. The ring structure is also referred to as ring network of ring topology.

Mapping at least some of the m*n bidirectional logical connections onto the physical ring structure significantly reduces the effort, error-proneness and required space when implementing the m*n bidirectional logical connections. A further advantage of the proposed ring topology is that further nodes can be added by simply connecting the node to the ring instead of connecting the new node with individual cables to all previous nodes.

According to a further aspect, the physical ring structure may comprise a dedicated channel that is reserved for traffic between an input stage and a center stage node of one of the m*n bidirectional logical connections that are mapped onto the physical ring structure so that traffic collision is prevented. Preferably, a predetermined bandwidth is allocated to the dedicated channel. In addition, this scheme provides constant latencies for the transport of the traffic, thus avoids the introduction of jitter.

In accordance with this aspect, the physical ring structure may comprise a dedicated channel having a predetermined bandwidth allocated thereto for each of the m*n bidirectional logical connections that are mapped onto the physical ring structure in order to provide collision free and latency constant connections between all IO nodes and all center stage nodes.

Thus, in contrast to typical ring topologies such as Token Ring networks, the proposed ring topology allows to fully use each of the bidirectional input stage - center stage node relationships at maximum possible, dedicated bandwidth at any point of time. As a result, the ring topology does not incur any bandwidth restriction on any single input stage - center stage node logical connection, so that the full mesh can fully be used at any point of time, and there is no bandwidth dependency between any two input stage - center stage node connections. By contrast, in Token Ring, the ring capacity determines the maximum bandwidth for any relations between nodes in the ring. In this sense, the ring bandwidth is shared for all relations.

In accordance with an aspect, traffic is transmitted between the input stages and center stage nodes of the at least some of the m*n bidirectional logical connections that are mapped onto the physical ring structure to multiplex the multiplexing entities onto the physical ring structure. Preferably, a combination of multiplexing techniques is used to multiplex the multiplexing entities using at least one of a wavelength-division multiplexing, time-division multiplexing, spatial multiplexing, wherein logical connections are mapped to fibers of the ring structure, or optical burst multiplexing, wherein logical connections are mapped to streams of optical bursts within the ring. By way of example, a dedicated channel may be implemented by using at least one of a wavelength-division multiplexing, time-division multiplexing, spatial multiplexing or optical burst multiplexing.

In accordance with an aspect, a first segment of a multiplexing plane of the physical ring structure is used to carry multiplexing entities from an input stage to a particular center stage node and a remaining segment of the multiplexing plane of the physical ring structure may be used to carry multiplexing entities from the particular center stage node to the input stage, thereby providing a bidirectional dedicated channel between the input stage and the particular center stage node.

This configuration offers the advantage of enabling a bidirectional communication pathway using a unidirectional communication medium by dividing the closed loop of the ring into two segments, one segment being used for sending multiplexing entities from the input stage to the center stage node, the other segment being used for sending multiplexing entities from the center stage node to the input stage.

According to an aspect, the communication system may be a multi-shelf system, with the m IO nodes and the n center stage nodes being distributed over at least a first and a second shelf, wherein an input stage located in the first shelf is physically connected to a center stage node located in the second shelf over the physical ring structure. In other words, the IO nodes and center stage nodes are installed away from each other, i.e. spatially distant and not in the same rack or shelf and wherein the distance is bridged by the ring network avoiding the need for complex connection cabling between the IO nodes and center stage nodes.

Preferably, the input stages and center stage nodes that are located on the same shelf are connected shelf internal, e.g. using the electrical backplane, without using the physical ring structure.

According to an aspect, the number m of IO nodes may be equal to the number n of center stage nodes, so that each input stage is allocated to one center stage node and vice versa. It will be appreciated that the IO nodes and center stage nodes may be arranged along the ring topology using different configurations. By way of example, the communication system may comprise one or more shelves that comprise center stage nodes, only. This configuration may be advantageous if the center stage nodes cannot be allocated into the same node as the IO nodes for complexity reasons. Alternately, the communication system may comprise one or more shelves that comprise IO nodes, only.

In order to mitigate the risk of a ring cut or break, the physical ring structure may comprise a redundant ring topology such as dual-ring contradirectional ring architecture, with sending all traffic to both rings and deciding on the receiver side which of the two rings to take the traffic from.

In accordance with an aspect, a capacity of the multiplexing entity is larger than a size of an information entity to be switched and the multiplexing entity comprises a plurality of payload information entities destined to different target input stages. The center stage nodes may be configured to decompose a received multiplexing entity into the smaller information entities contained therein and to allocate each of the decomposed information entities to different outgoing multiplexing entities, each destined for a different target input stage. In other words, the center stage may decompose a received multiplexing entity into those smaller pieces of information, and allocate those to different outgoing multiplexing entities, each destined to a different target input stage. The multiplexing entities may serve as transport containers for smaller information entities. In this case the switching entity represented by the smaller pieces of information is smaller than the capacity of a multiplexing entity.

Alternatively, the multiplexing entities transported on the ring may have smaller bandwidth than the payload information entities to be transported and switched. In this case, the traffic from an IO interface is split (inversely multiplexed) and transported via several multiplexing entities over the ring. The center stage switches the complete received multiplexing entities to the correct target input stage. As a special case, both parameters may be of the same size, so no multiplexing or inverse multiplexing is required. Also mixed cases may occur, e.g. different sizes of information has to be switched that require both of the above schemes to be applied in parallel on the same system and ring.

For illustrative purposes, only, the following non-limiting examples are provided:
A SDH/Sonet cross-connect with a 3 stage Clos matrix: the input stage implements the 1st and 3rd stage, the center stage node implements the 2nd stage of the Clos matrix. The interconnection between input stage and center stage may represent the full mesh between 1st /2nd and 2nd/3rd stages as multiplexing entities on the ring, with the smaller information pieces being individual VC-4 or STS-1 within these multiplexing entities. Input stage and center stage may switch the traffic on VC-4 or STS-1 granularity. A central control instance may control the allocation of particular VC-4/STS-1 to particular multiplexing entities on the ring, and consequently to being switched on a particular center stage.

According to a further example: A SDH/Sonet cross-connect capable of switching VC-4 (140 Mbit/s) and all contiguously concatenated signals up to VC-4-64c (10 Gbit/s). Assuming a ring multiplexing entity size of some value between 140 MBit/s and 10GBit/s, both multiplexing and inverse multiplexing may need to be employed in parallel. The input stage and center stage node have to be capable to switch on VC-4 granularity.

According to a further example of a multi-stage packet switch: Packet flows (with packets e.g. up to 9600 bytes) may be decomposed into cells (of e.g. between 128 and 256 bytes size) that are switched in the input stage and the center stage node. The multiplexing entities on the ring contain several of these cells each. The center stage switches cells. Depending on the original packet size the center stage node may, by switching a particular cell, switch several complete (smaller), exactly one, or a fragment of a (bigger) packet.

The proposed mapping of a logic m*n mesh, at least partly, to a physical ring structure differs not only from Token Rings in that each logical connection on the ring is assigned a dedicated channel and/ or bandwidth but also differs in further aspects: For instance, Token Ring directly connects nodes in the ring, comparable to input stage nodes as defined above. There is no other, intermediate ring element, i.e., end systems communicate directly with each other. By contrast, according to the proposed ring structure, there is no direct connection between IO nodes, but instead only between input stages and center stage nodes, and between center stages nodes and input stages. All traffic is passing through center stage nodes resulting in a fundamentally different ring topology compared to Token Ring. Furthermore, even if there is no actual traffic flowing (e.g. no VC-4 cross-connection switched in a SDH cross-connect, e.g. no packet to be switched in a packet switch) there is a static relationship between each input stage and each center stage node, bidirectionally. This relationship topology is preferably fixed over time (even if bandwidth flowing over each relationship may vary over time), as it reflects the full meshing between all IO nodes and center stage nodes, and does not reflect any user traffic pattern. In Token Ring the relation between ring nodes is purely driven by the user traffic pattern.

In accordance with an aspect, a method for switching traffic in a communication system is provided, the communication system comprising a physical ring structure, a plurality of m IO nodes, each node having an IO interface and an input stage, wherein the input stage is connected to the physical ring structure, and a plurality of n center stage nodes connected to the physical ring structure. Each input stage is logically connected to each center stage node and each center stage node is logically connected to each input stage, resulting in m*n bidirectional logical connections. The method comprises the step of allocating traffic arriving from an IO interface at the input stage to multiplexing entities transportable via the ring structure. The method further comprises the step of transmitting multiplexing entities between an input stage and a center stage node of at least some of the m*n bidirectional logical connections over the physical ring structure. All traffic entering the system through one of the IO nodes is routed through one of the center stage nodes before leaving the system through one of the IO nodes. A dedicated channel is reserved for traffic that is transmitted over the physical ring structure between an input stage and a center stage node.

The above method may be combined with the previous aspects to form further embodiments.

### Brief Description of Figures

The invention is explained below in an exemplary manner with reference to the accompanying drawings, wherein
Fig. 1 shows a mesh structure with logical m*n bidirectional connections between IO nodes and center stage nodes;
Figs. 2A and 2B illustrate schematically a multi-shelf system with a mesh structure of Fig. 1;
Fig. 3 shows a communication system according to an embodiment;
Fig. 4 shows a block diagram illustrating the main components of an IO node and a center stage node according to an embodiment;
Fig. 5 shows a communication system according to an embodiment;
Fig. 6 illustrates schematically how multiplexing entities are transmitted through the communication system according to an embodiment;
Fig. 7 illustrates schematically how multiplexing entities are transmitted through the communication system according to a further embodiment; and
Fig. 8 shows a flow diagram of steps involved in a method according to an embodiment.

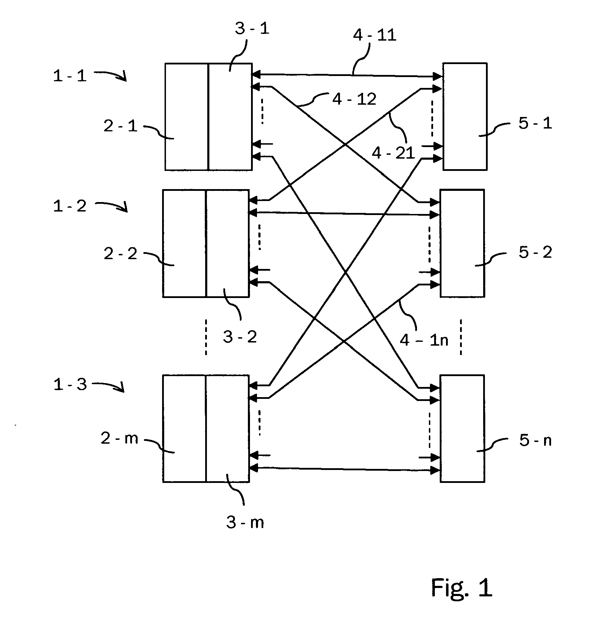

Fig. 1 shows a mesh structure with logical m*n bidirectional connections between a plurality of m IO nodes 1 (denoted as 1-1 to 1-m) and a plurality of m center stage nodes 5 (denoted as 5-1 to 5-n). Each IO node 1 having an IO interface and an input stage, wherein the reference numerals 2-1 to 2-m and 3-1 to 3-m denote the IO interfaces and input stages of the respective IO nodes. The plurality of input stages 3 are configured to allocate traffic arriving from an IO interface 2 of an IO node 1 to multiplexing entities (not shown) and to generate outgoing traffic from received multiplexing entities (not shown) via the IO interfaces 2 of the IO node 1. The plurality of n center stage nodes 5 are configured to switch data received via multiplexing entities, wherein each center stage node is logically connected to each input stage 3 and each input stage 3 is logically connected to each center stage node 5, resulting in m*n bidirectional logical connections 4. The reference numeral 4-ij denotes a bidirectional logical connection between the input stage 3-i and the center stage node 5-j.

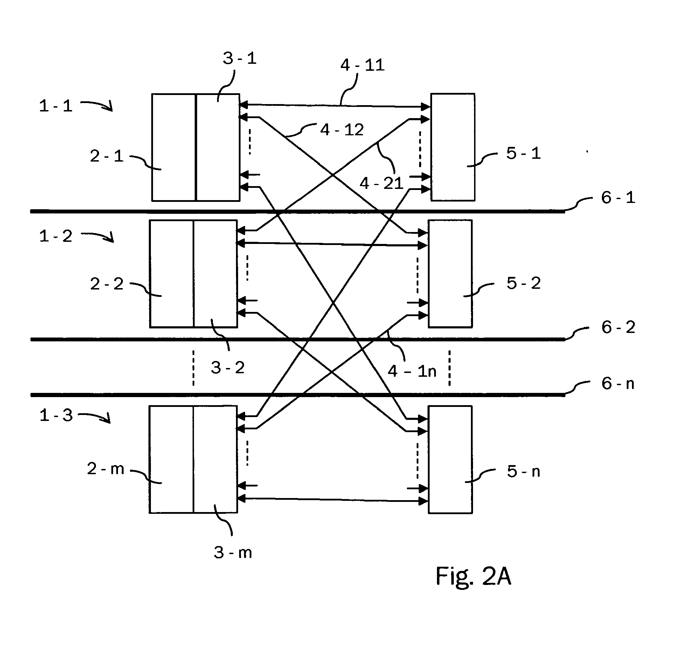

The problem in multi-shelf systems is that the IO nodes and center stage nodes are distributed over several shelves. Fig. 2A illustrates the specific case where the number of IO nodes and center stage nodes are identical, so one center stage node can be allocated to each input stage node. The lines 6-1 to 6-n illustrate the separation between individual shelves. Each shelf houses an IO node 1 and a center stage node 5. The arrow lines that cross one of the lines 6-1 to 6-n represent logical connections that connect nodes across different shelves.

A known implementation of the mesh of m*n bidirectional logical connections 4 is realized by using two optical interconnect cables for connecting an input stage 3-i with a center stage node 5-j, thereby implementing the bidirectional logical connection 4-ij, resulting in many such cable connections between the shelves to implement the full m*n mesh.

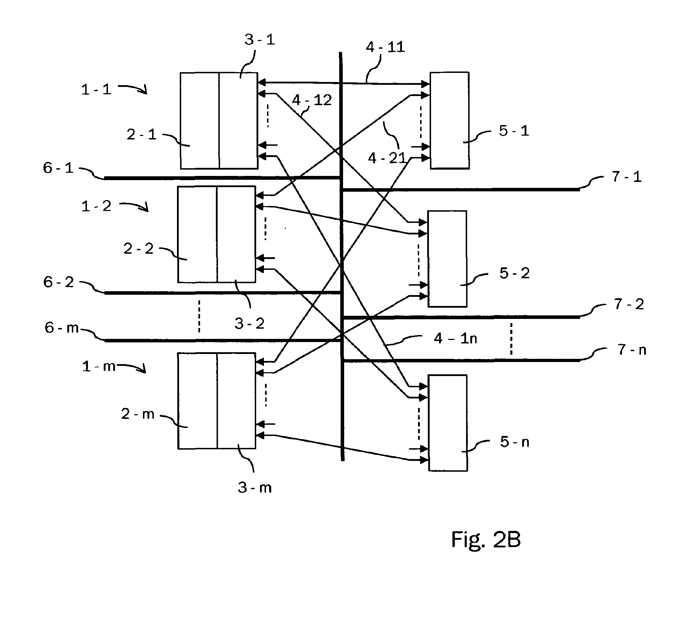

Fig. 2B illustrates the general case where any number of m input stages and n center stages are supported, wherein input stages and center stage nodes are located in separate shelves , respectively. The lines 6-1 to 6-m and 7-1 to 7-n illustrate the separation between the shelves.

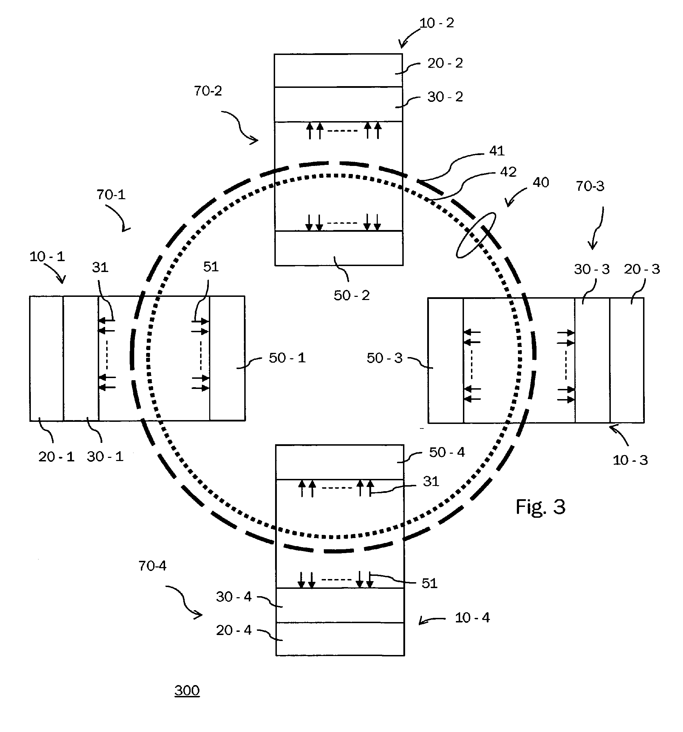

Fig. 3 shows a communication system according to an embodiment of the present invention, wherein the complex m*n cabling connecting the input stages and center stage nodes is avoided by using a physical ring structure 40. The communication system 300 comprises a plurality of m IO nodes 10, each node having an IO interface 20 and an input stage 30, wherein the plurality of input stages 30 are configured to allocate traffic arriving from an IO interface 20 of an IO node 10 to multiplexing entities and to generate outgoing traffic from received multiplexing entities via the IO interfaces 20 of the IO node 10. The multiplexing entities are not shown in Fig. 3. The communication system further comprises a plurality of n center stage nodes 50 for switching data received via multiplexing entities transportable over the ring structure 40, wherein each center stage node is logically connected to each input stage 30 and each input stage 30 is logically connected to each center stage node 50, resulting in m*n bidirectional logical connections, wherein all traffic entering the system through one of the IO nodes 10 is routed through one of the center stage nodes 50 before leaving the system through one of the IO nodes 10.

Reference numbers 10 and 50 are suffixed with "-i", i being an integer ranging from 1 to m or 1 to n to denote the individual nodes of the plurality of IO nodes and center stage nodes. Likewise, reference numbers 20 and 30 are suffixed with "-i", i being an integer ranging from 1 to m to denote the IO interface and the input stage of the i-th IO node. The embodiment shown in Fig. 3 illustrates the particular case where the system comprise the same number of input stages 30 as center stage nodes 50, i.e., n=m.

The communication system further comprises a physical ring structure 40, wherein the plurality of input stages 10 and the plurality of center stages 50 are connected to the physical ring structure 40. According to the embodiment shown in Fig. 3, all bidirectional logical connections shown in Fig. 2A that connect input stages and center stage nodes located in different shelves 70-1 to 70-n are mapped onto the physical ring structure 40, so that the multiplexing entities 60 transmitted between these input stages 30-i and the center stage nodes 30-j, i≠j, are transmitted over the physical ring structure 40. The logical connection between the input stage and the center stage node that are located within a node or shelf, i=j, are implemented shelf local, i.e., without using the ring topology.

In order to mitigate the risk of a ring cut or break, the physical ring structure comprises a redundant ring topology using a dual ring contradirectional ring architecture with two rings 41 and 42. Each ring 41 and 42 is used unidirectionally when transmitting multiplexing entities, with the transmitting side sending identical traffic to both rings, and the receiver selecting the traffic from one of the rings. The lines 31 and 51 illustrate the connections with which the input stage 30 and the center stage 50 are connected to the physical ring structure 40.

According to further embodiments, a number of center stage nodes is an integer multiple or fraction of number of the input stage. By way of example, two center stages per node, or three center stages per node, or a center stage only in every second node, or a center stage only in every third node may be provided.

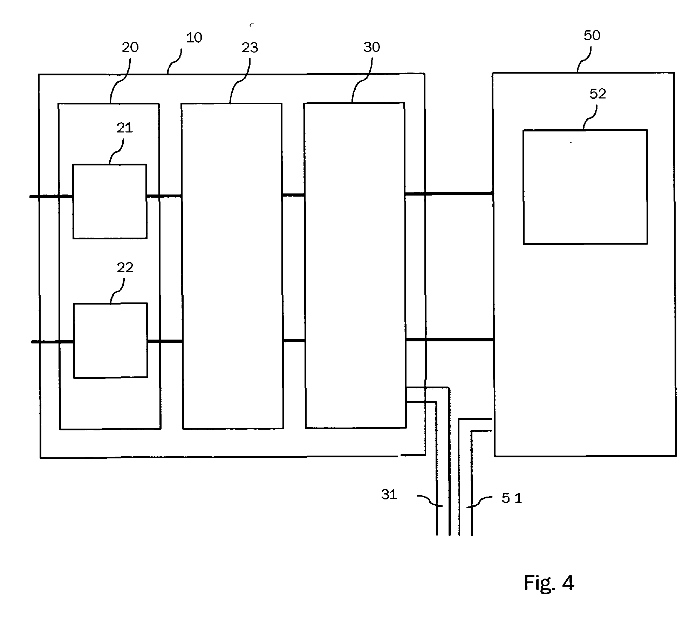

Fig. 4 shows a block diagram illustrating the main components of an IO node 10 and a center stage node according to an embodiment of the present invention.

The IO interface 20 comprises a receiving unit 21 for ingress traffic and a transmitting unit 22 for egress tragic. The receiving unit 21 passes the incoming network traffic on to a traffic processor 23 for forwarding, classification, prioritization and flow-control. The traffic processor 23 interfaces with the input stage 30. The input stage has the tasks to allocate the traffic arriving from the receiving unit 21 to multiplexing entities transportable via the ring 40 (e.g. time slots on a particular wavelength), and constructing the outgoing traffic from those multiplexing entities and passing it on to the transmitter unit 22. The input stage and fabric adaptation 30 switches and sends (possibly, but not necessarily controlled by a control instance with visibility over all nodes attached to the ring 40) those multiplexing entities to the ring, resp. receives and switches entities destined to it.

The IO interface 20 and the traffic processors 23 are typically implemented on a line card. The input stage 30 may be implemented on a separate card or also on a line card. According to an embodiment, the line card is an IO card of a big-cell-switched system (supporting packet and/or TDM switching). The fabric adaptation that is part of 30 transforms traffic into cells towards the center stage node 50 that is implemented on one switch card or several switch cards, and reassembling traffic out of cells received from the switch card(s). Each switch cards may contain 1 to several switch elements that switch cells received from the IO cards 8, and sending them to IO cards 8 after switching.

The lines 31 and 51 illustrate the connections with which the input stage 30 and the center stage 50 are connected to the physical ring structure 40.

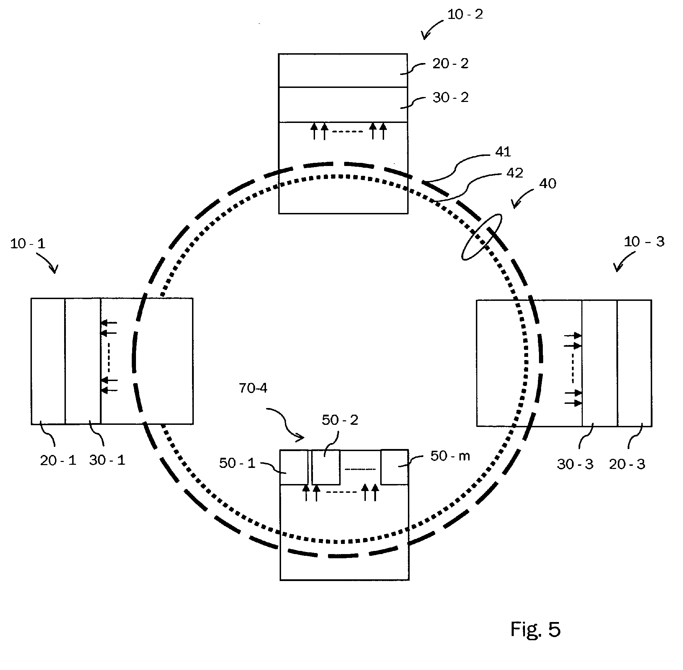

Fig. 5 shows a communication system according to another embodiment of the present invention, wherein center stage nodes 50 are placed in one or more separate shelves 70-4 that are interconnected to the ring 40. This alternative may be appropriate e.g. if the center stage nodes cannot be allocated into the same node as the IO nodes 10 for complexity reasons, or if the numbers m and n do not allow a simple allocation of center stage elements to nodes containing the input stage. According a further embodiment, m input stages and n center stage nodes as shown in Fig. 2B may be attached separately to a ring structure.

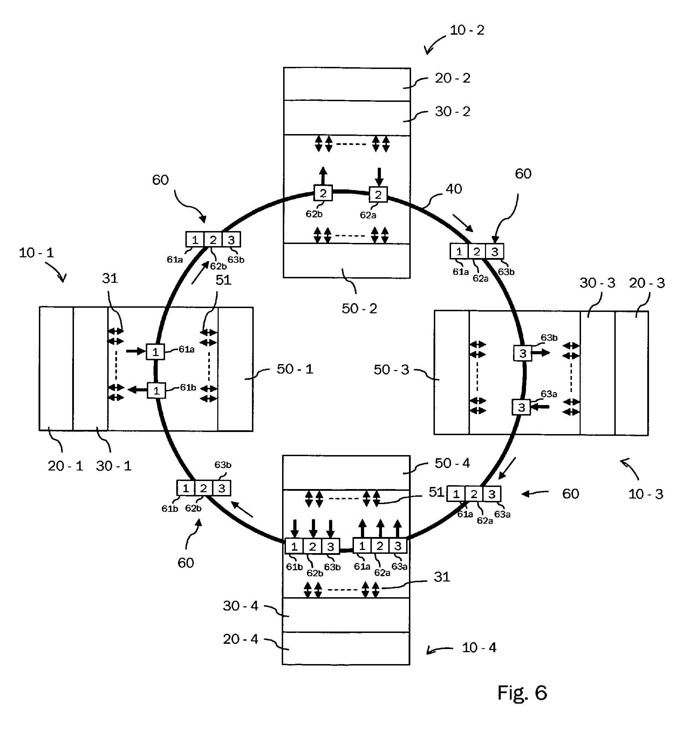

Fig. 6 illustrates schematically how multiplexing entities are transmitted through the communication system according to an embodiment of the present invention. For illustration purposes only, a simple communication system is shown with four IO nodes 10-1 to 10-4 (m=4) and four center stage nodes 50-1 to 50-4 (n=4).

The physical ring structure 40 comprises a dedicated channel having a predetermined bandwidth allocated thereto that is reserved for traffic between an input stage 30-i and a center stage node 50-j of one of the m*n bidirectional logical connections for each of the m*n bidirectional logical connections that are mapped onto the physical ring structure 40. In the illustrated embodiment, a combination of a wavelength-division multiplexing and a time-division multiplexing (or optical burst mode) is used. Each center stage node 50 is allocated a fixed wavelength (or set of several wavelengths). Each input stage 30 inserts in TDM or optical burst mode the traffic that represents the logical connection to the center stage node onto this wavelength/set of wavelengths. The target center stage node extracts all this traffic upon arrival via the ring 40 from the wavelength/set of wavelengths, and switches it in the center stage node element. This insertion in the input stage and the extraction in the center stage node implement the unidirectional input stage to center stage part of the bidirectional connection between an input stage and a center stage node. The center stage 50, after switching the cells, inserts them back into the ring, 40 using the same wavelength/set of wavelengths. Each input stage 30 extracts in TDM or optical burst mode the traffic from the wavelength/set of wavelengths transmitted from the center stage 50 that represents the logical connection from the center stage node to the input stage. This insertion in the center stage node and extraction at a target input stage represents the unidirectional center stage to input stage part of the bidirectional input stage - center stage node connection.

This is illustrated in Fig. 6 using a multiplexing entity 60 that transports traffic unidirectionally over the ring 40 from input stages 30-1, 30-2 and 30-3 to center stage 50-4 and that transports traffic from the center stage 50-4 to input stages 30-1, 30-2 and 30-3 using the same allocated channel. Thus, Fig. 6 describes the traffic transmitted over the ring that corresponds to the logical connections for m= 1, 2 and 3 and for n = 4 of the m:n mesh.

At input stage 30-1, ingress traffic 61a from the IO interface 20-1 is transformed into multiplexing entities 60 such as a cell. The block 61 represents traffic data destined for the center stage node 50-4. The center stage node 50-4 is allocated a fixed wavelength. The input stage 30-1 inserts in TDM or optical burst mode the traffic 61a that represents the logical connection to the center stage node 50-4 onto this wavelength/set of wavelengths. Likewise, the input stages 30-2 and 30-3 add traffic data 62a and 63a onto the same wavelength/set of wavelengths that represent the logical connection to the center stage node 50-4.

The target center stage node 50-4 extracts all this traffic 61a, 62a, 63a transported via the multiplexing entity 60 upon arrival via the ring 40 from the wavelength/set of wavelength, and switches it in the center stage node element 50-4. Thus, the center stage node 50-4 adds three new blocks 61b, 62b and 63b into the multiplexing entity 60. The center stage node 50-4, after switching the cells, inserts them back into the ring 40 using the same wavelength/set of wavelengths in TDM or optical burst mode. Each input stage 30-1, 30-2 and 30-3 extracts in TDM or optical burst mode the traffic 61b, 62b, and 63b respectively from the wavelength/set of wavelengths transmitted from the center stage 50-4 that represents the logical connection from the center stage node 50-4 to the respective input stage 30-1, 30-2 or 30-3.

Similarly, all traffic destined for the center stage node 50-3 (or 50-2 or 50-1) is transmitted using a different channel by allocated a different wavelength to traffic to and from the center stage node 50-3 (or 50-2 or 50-1).

A property of this solution is that at each ring span the wavelength/set of wavelengths is fully utilized, as the sum of traffic from an input stage to a center stage and traffic from a center stage to an input stage is constant at each span of the link.

The embodiment illustrate the case of a cell-switched systems, but the principle of the invention can be applied at a wider scope, e.g. for packet systems and pure TDM switches. It is applicable for all systems implementing a fixed m:n allocation of some IO attached input stages and some topologically centralized central stage nodes.

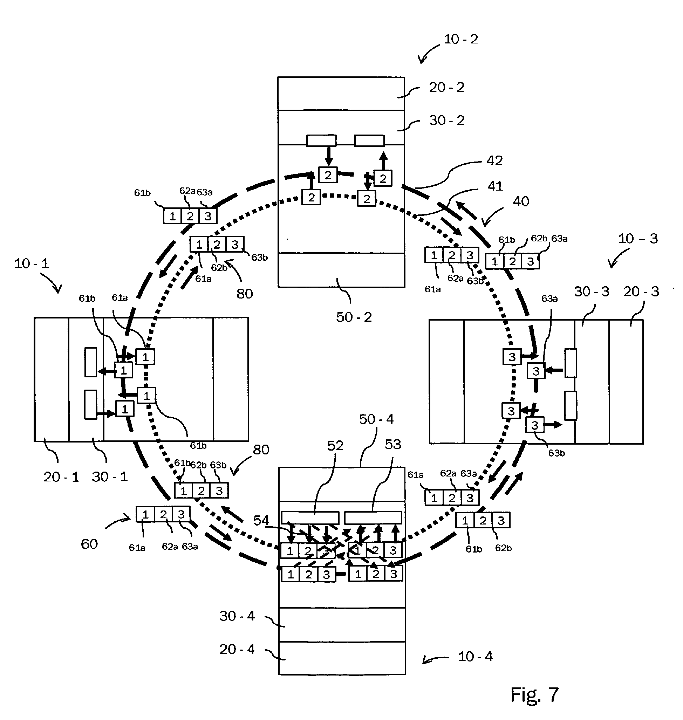

Fig. 7 illustrates schematically how multiplexing entities are transmitted through the communication system according to a further embodiment of the present invention. The example shown in Fig. 7 differs from the example shown in Fig. 6 in that a redundant ring topology using a dual ring counter-rotating ring architecture with two rings 41 and 42 is used. Fig. 7 again illustrate the traffic from the input stages 30-1, 30-2 and 30-3 to the center stage node 50-4 and the traffic from the center stage 50-4 to the input stages 30-1, 30-2 and 30-3. The multiplexing entities 60 and 80 are transmitted in opposite directions over the ring. Upon receiving the multiplexing entities 60 and 80 from both rings 41 and 42, the center stage node 50-4 selects one of the multiplexing entities 60 and 80 for further processing. Since the multiplexing entities 60 and 80 do not exactly arrive at the same time, the center stage node comprises an additional buffering unit (part of the ring receiver unit 53 that also contains a switch to select from which of the rings 41 or 42 to select the traffic). After having switched the extracted traffic from the received and selected multiplexing entity, the center stage node 50-4 broadcasts with the ring transmitter unit 52 the multiplexing entity using his allocated wavelength on both rings 41 and 42. For illustrating purposes, the ring receiver unit 53 and the ring transmitter unit 52 are shown only as components of the center stage node 50-4. It will be appreciated that the other center stage nodes also comprise a ring receiver unit 53 and a ring transmitter unit 52.

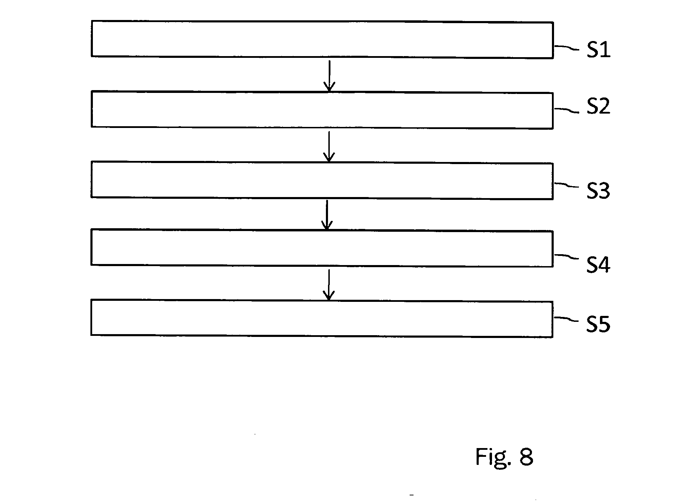

Fig. 8 shows a flow diagram of steps involved in a method for switching traffic in a communication system according to an embodiment.

In step S1, traffic is allocated from an IO interface 10 at the input stage 30 to multiplexing entities 60 and 80 transportable via the ring structure 40. In step S2, each input stage 30 inserts in TDM or optical burst mode the traffic that represents the logical connection to a particular center stage node 50 onto the wavelength/set of wavelengths that is allocated to the particular center stage node. In step S3, the center stage node 50 extracts all traffic transmitted over the ring using this dedicated wavelength/ set of wavelengths, upon arrival via the ring. In step S4, the extracted ring is switched at the center stage node. In step S5, the switched traffic is inserted back into the ring 40 by the center stage node 50, using the same wavelength/set of wavelengths.

In step S5, each input stage extracts in TDM or optical burst mode the traffic transmitted over the ring from the wavelength/set of wavelengths.

The embodiments described below give various examples for a communication system with a full mesh of m:n bidirectional logical connections between IO nodes and center stage nodes wherein at least some of the bidirectional logical connections are mapped onto the ring structure.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A communication system, comprising:
a plurality of m IO nodes (10), each IO node having an IO interface (20) comprising one or more IO ports and an input stage (30), wherein the plurality of input stages (30) are configured to allocate traffic arriving from an IO interface (20) of an IO node (10) to multiplexing entities and to generate outgoing traffic from received multiplexing entities (60 and 80) via the IO interfaces (20) of the IO node (10);
a plurality of n center stage nodes (50) for switching data received via multiplexing entities, wherein each center stage node is logically connected to each input stage (30) and each input stage (30) is logically connected to each center stage node (50), resulting in m*n bidirectional logical connections, wherein all traffic entering the system through one of the IO nodes (10) is routed through one of the center stage nodes (50) before leaving the system through one of the IO nodes (10); and
a physical ring structure (40), wherein the plurality of input stages (10) and the plurality of center stages (50) are connected to the physical ring structure (40), and wherein at least some of the m*n bidirectional logical connections are mapped onto the physical ring structure (40), so that at least some of the multiplexing entities (60 and 80) transmitted between one of the input stages (20) and one of the center stage nodes (50) are transmitted over the physical ring structure (40).

2. A communication system according to claim 1, wherein the physical ring structure (40) comprises a dedicated channel that is reserved for traffic between an input stage (30-i) and a center stage node (50-j) of one of the m*n bidirectional logical connections that are mapped onto the physical ring structure (40).

3. A communication system according to claim 2, wherein a predetermined bandwidth is allocated to the dedicated channel.

4. A communication system according to claims 2 or 3, wherein the physical ring structure (40) comprises a dedicated channel having a predetermined bandwidth allocated thereto for each of the m*n bidirectional logical connections that are mapped onto the physical ring structure (40).

5. A communication system according to any one of the preceding claims, wherein traffic is transmitted between an input stage (30) and a center stage node (50) by multiplex the multiplexing entities (60 and 80) onto the physical ring structure (40).

6. A communication system according to claim 5, wherein a combination of multiplexing techniques is used to multiplex the multiplexing entities using at least one of a wavelength-division multiplexing, time-division multiplexing, spatial multiplexing or optical burst multiplexing.

7. A communication system according to any one of the claims 2, 3 or 4, wherein a dedicated channel is implemented by using at least one of a wavelength-division multiplexing, time-division multiplexing, spatial multiplexing, or optical burst multiplexing,

8. A communication system according to claim 7, wherein a first segment of a multiplexing plane of the physical ring structure is used to carry multiplexing entities (60 and 80) from an input stage (30-i) to a particular center stage node (50-j) and a remaining segment of the multiplexing plane of the physical ring structure (40) is used to carry multiplexing entities (60 and 80) from the particular center stage node (50-j) to the input stage (30-i), thereby providing a bidirectional dedicated channel between the input stage (30-i) and the particular center stage node (50-j).

9. A communication system according to any one of the preceding claims, wherein the communication system is a multi-shelf system, wherein the m IO nodes (10) and the n center stage nodes (50) are distributed over at least a first (70-i) and a second shelf (70-j), wherein an input stage (30-i) located in the first shelf (70-i) is physically connected to a center stage node (50-j) located in the second shelf (70-j) over the physical ring structure (40).

10. A communication system according to claim 9, wherein the input stages (30-i) and center stage nodes (50-i) that are located on the same shelf (70-i) are connected shelf local without using the physical ring structure (40).

11. A communication system according to any one of the preceding claims, wherein the physical ring structure (40) comprises a dual-ring contradirectional ring architecture (41, 42).

12. A communication system according to any one of the preceding claims, wherein the system is one of a cell-switched system, a packet-switched system or a TDM switched system, or any combination thereof.

13. A communication system according to any one of the preceding claims, wherein a capacity of the multiplexing entity (60 and 80) is larger than a size of an information entity to be switched and the multiplexing entity (60 and 80) comprises information entities destined to different target input stages (30), wherein the center stage nodes (50) are configured to decompose a received multiplexing entity (60 and 80) into the smaller information entities contained therein and to allocate each of the decomposed information entities to different outgoing multiplexing entities, each destined for a different target input stage (50).

14. A communication system according to any one of the preceding claims 1 to 13, wherein the capacity of a multiplexing entity (60 and 80) is smaller than the size of an information entity to be switched, wherein the traffic from an input stage (30) destined for a center stage node (50) is split and transported via more than one multiplexing entities (60 and 80) over the physical ring structure (40).

15. A method for switching traffic in a communication system, the communication system comprising a physical ring structure (40), a plurality of m IO nodes (10), each node (10) having an IO interface (20) comprising one or several IO ports and an input stage (30), wherein the input stage (20) is connected to the physical ring structure (40), and a plurality of n center stage nodes (50) connected to the physical ring structure (40), wherein each input stage (30) is logically connected to each center stage node (50) and each center stage node (50) is logically connected to each input stage (30), resulting in m*n bidirectional logical connections; the method comprising the steps of:
allocating traffic arriving from an IO interface (10) at the input stage (30) to multiplexing entities (60 and 80) transportable via the ring structure (40); and
transmitting multiplexing entities (60 and 80) between an input stage (30) and a center stage node (50) of at least some of the m*n bidirectional logical connections over the physical ring structure (40);
wherein all traffic entering the system through one of the IO nodes (10) is routed through one of the center stage nodes (50) before leaving the system through one of the IO nodes (10), and
wherein a dedicated channel is reserved for traffic that is transmitted over the physical ring structure (40) between an input stage (30-i) and a center stage node (50-j).

## Patentansprüche

1. Kommunikationssystem, umfassend:
Eine Vielzahl von IO-Knoten (10), wobei jeder IO-Knoten eine IO-Schnittstelle (20) mit einem oder mehreren IO-Ausgängen und einer Eingangsstufe (30) umfasst, wobei die Vielzahl der Eingangsstufen (30) konfiguriert ist für das Zuweisen von Datenverkehr, der von einer IO-Schnittstelle (20) eines IO-Knotens (10) bei Multiplexingeinheiten eingeht, und für das Generieren von Ausgangsdatenverkehr von den empfangenen Multiplexingeinheiten (60 und 80) über die IO-Schnittstellen (20) des IO-Knotens;
eine Vielzahl von n Mittelstufenknoten (50) für das Vermitteln von über die Multiplexingeinheiten empfangenen Daten, wobei jeder Mittelstufenknoten logisch mit jeder Eingangsstufe (30) und jede Eingangsstufe (30) logisch mit jedem Mittelstufenknoten (50) verbunden ist, woraus sich m*n bidirektionale logische Verbindungen ergeben, wobei sämtlicher durch einen der IO-Knoten (10) beim System eingehender Datenverkehr über einen der Mittelstufenknoten (50) geroutet wird, ehe er das System über einen der IO-Knoten (10) verlässt; und
eine physische Ringstruktur (40), wobei die Vielzahl der Eingangsstufen (10) und die Vielzahl der Mittelstufen (50) an die physische Ringstruktur (40) angeschlossen sind und wobei mindestens einige der m*n bidirektionalen, logischen Verbindungen der physischen Ringstruktur (40) zugewiesen sind, so dass mindestens einige der zwischen einer der Eingangsstufen (20) und einem der Mittelstufenknoten (50) übertragenen Multiplexingeinheiten (60 und 80) über die physische Ringstruktur (40) übertragen wird.

2. Kommunikationssystem nach Anspruch 1, wobei die physische Ringstruktur (40) einen dedizierten Kanal umfasst, der dem Datenverkehr zwischen einer Eingangsstufe (30-i) und einem Mittelstufenknoten (50-j) einer der m*n bidirektionalen, logischen Verbindungen vorbehalten ist, die der physischen Ringstruktur (40) zugewiesen sind.

3. Kommunikationssystem nach Anspruch 2, wobei dem dedizierten Kanal eine voreingestellte Bandbreite zugeordnet ist.

4. Kommunikationssystem nach den Ansprüchen 2 oder 3, wobei die physische Ringstruktur (40) einen dedizierten Kanal mit voreingestellter Bandbreite umfasst, der ihr für jede der m*n bidirektionalen logischen Verbindungen zugeordnet ist, die der physischen Ringstruktur (40) zugewiesen sind.

5. Kommunikationssystem nach einem beliebigen der vorstehenden Ansprüche, wobei der Datenverkehr durch Multiplexing der Multiplexingeinheiten (60 und 80) zwischen einer Eingangsstufe (30) und einem Mittelstufenknoten (50) auf die physische Ringstruktur (40) übertragen wird.

6. Kommunikationssystem nach Anspruch 5, wobei für das Multiplexen der Multiplexingeinheiten eine Kombination von Multiplexingtechniken verwendet wird, wobei mindestens eine der Techniken Wellenlängenmultiplexing, Zeitmultiplexing, räumliches Multiplexing oder optisches Burst-Multiplexing mindestens zur Anwendung kommt.

7. Kommunikationssystem nach einem beliebigen der Ansprüche 2, 3 oder 4, wobei unter Anwendung mindestens einer der Techniken Wellenlängenmultiplexing, Zeitmultiplexing, räumliches Multiplexing oder optisches Burst-Multiplexing ein dedizierter Kanal implementiert wird.

8. Kommunikationssystem nach Anspruch 7, wobei ein erstes Segment einer Multiplexingebene der physischen Ringstruktur verwendet wird für die Übertragung von Multiplexingeinheiten (60 und 80) von einer Eingangsstufe (30-i) zu einem konkreten Mittelstufenknoten (50-j) und ein verbleibendes Segment der Multiplexingebene der physischen Ringstruktur (40) verwendet wird für das Übertragen von Multiplexingeinheiten (60 und 80) von dem konkreten Mittelstufenknoten (50-j) zur Eingangsstufe (30-i), dabei einen bidirektionalen, dedizierten Kanal zwischen der Eingangsstufe (30-i) und dem konkreten Mittelstufenknoten (50-j) zur Verfügung stellend.

9. Kommunikationssystem nach einem beliebigen der vorstehenden Ansprüche, wobei das Kommunikationssystem ein Mehrfächersystem ist, wobei die m IO-Knoten (10) und die n Mittelstufenknoten (50) verteilt sind über mindestens ein erstes (70-i) und ein zweites Fach (70-j), wobei eine im ersten Fach (70-i) befindliche Eingangsstufe (30-i) über die physische Ringstruktur (40) physisch verbunden ist mit einem im zweiten Fach (70-j) befindlichen Mittelstufenknoten (50-j).

10. Kommunikationssystem nach Anspruch 9, wobei die Eingangsstufen (30-i) und die im selben Fach (70-i) befindlichen Mittelstufenknoten (50-i) lokal im Fach ohne Benutzung der physischen Ringstruktur (40) verbunden sind.

11. Kommunikationssystem nach einem beliebigen der vorstehenden Ansprüche, wobei die physische Ringstruktur (40) eine kontradirektionale Dualring-Ringarchitektur (41,42) umfasst.

12. Kommunikationssystem nach einem beliebigen der vorstehenden Ansprüche, wobei das System entweder ein zellenvermitteltes System, ein paketvermitteltes System, ein TDM-vermitteltes System oder ein aus vorgenannten Techniken kombiniertes System ist.

13. Kommunikationssystem nach einem beliebigen der vorstehenden Ansprüche, wobei eine Kapazität der Multiplexingeinheit (60 und 80) einen größeren Wert als die Größe einer zu vermittelnden Informationseinheit hat und die Multiplexingeinheit (60 und 80) Informationseinheiten umfasst, die für verschiedene Ziel-Eingangsstufen (30) bestimmt sind, wobei die Mittelstufenknoten (50) konfiguriert sind für das Zerlegen einer empfangenen Multiplexingeinheit (60 und 80) in kleinere darin enthaltene Informationseinheiten und für das Zuweisen einer jeden zerlegten Informationseinheit zu verschiedenen ausgehenden Multiplexingeinheiten, die jeweils für verschiedene Ziel-Eingangsstufen (30) bestimmt sind.

14. Kommunikationssystem nach einem beliebigen der Ansprüche 1 bis 13, wobei die Kapazität einer Multiplexingeinheit (60 und 80) kleiner ist als die Größe einer zu vermittelnden Informationseinheit, wobei der für einen Mittelstufenknoten (50) bestimmte, von einer Eingangsstufe (30) kommende Datenverkehr aufgeteilt und über mehr als eine Multiplexingeinheit (60 und 80) über die physische Ringstruktur (40) transportiert wird.

15. Verfahren für das Vermitteln von Datenverkehr in einem Kommunikationssystem, wobei das Kommunikationssystem eine physische Ringstruktur (40) und eine Vielzahl von IO-Knoten (10) umfasst, wobei jeder Knoten (10) eine IO-Schnittstelle (20) mit einem oder mehreren IO-Ausgängen und einer Eingangsstufe (30) umfasst, wobei die Eingangsstufe (20) mit der physischen Ringstruktur (40) verbunden ist und eine Vielzahl von n Mittelstufenknoten (30) mit der physischen Ringstruktur (40) verbunden ist, wobei jede Eingangsstufe (30) logisch mit jedem Mittelstufenknoten (50) verbunden ist und jeder Mittelstufenknoten (50) logisch mit jeder Eingangsstufe (30) verbunden ist, m*n bidirektionale logische Verbindungen bildend; wobei das Verfahren folgende Schritte umfasst:
Zuweisen von Datenverkehr von einer IO-Schnittstelle (10) an der Eingangsstufe (30) zu Multiplexingeinheiten (60 und 80), die über die Ringstruktur (40) transportiert werden können; und
Übertragen von Multiplexingeinheiten (60 und 80) zwischen einer Eingangsstufe (30) und einem Mittelstufenknoten (50) von mindestens einigen der m*n bidirektionalen, logischen Verbindungen über die physische Ringstruktur (40);
wobei sämtlicher über einen der IO-Knoten (10) beim System eingehender Datenverkehr durch einen der Mittelstufenknoten (50) geroutet wird, ehe er das System über einen der IO-Knoten (10) verlässt, und
wobei ein dedizierter Kanal für Datenverkehr reserviert ist, der zwischen einer Eingangsstufe (30-i) und einem Mittelstufenknoten (50-j) über die physische Ringstruktur (40) übertragen wird.

## Revendications

1. Système de communication comprenant :
une pluralité de m noeuds d'E/S (10), chaque noeud d'E/S étant doté d'une interface d'E/S (20) comprenant un ou plusieurs ports d'E/S et un étage d'entrée (30), la pluralité d'étages d'entrée (30) étant configurée pour attribuer le trafic provenant d'une interface d'E/S (20) d'un noeud d'E/S (10) à des entités de multiplexage et pour générer un trafic sortant depuis les entités de multiplexage (60 et 80) reçues par le biais des interfaces d'E/S (20) du noeud d'E/S (10) ;
une pluralité de n noeuds d'étage central (50) destinés à commuter les données reçues par le biais des entités de multiplexage, chaque noeud d'étage central étant relié logiquement à chaque étage d'entrée (30) et chaque étage d'entrée (30) étant relié logiquement à chaque noeud d'étage central (50), ce qui résulte en m*n connexions logiques bidirectionnelles, la totalité du trafic qui pénètre dans le système à travers l'un des noeuds d'E/S (10) étant acheminé à travers l'un des noeuds d'étage central (50) avant de quitter le système à travers l'un des noeuds d'E/S (10) ; et
une structure en anneau physique (40), la pluralité d'étages d'entrée (10) et la pluralité d'étages centraux (50) étant reliées à la structure en anneau physique (40), et au moins certaines des m*n connexions logiques bidirectionnelles étant mises en correspondance sur la structure en anneau physique (40) de sorte qu'au moins certaines des entités de multiplexage (60 et 80) transmises entre l'un des étages d'entrée (20) et l'un des noeuds d'étage central (50) sont transmises par le biais de la structure en anneau physique (40).

2. Système de communication selon la revendication 1, avec lequel la structure en anneau physique (40) comprend un canal dédié qui est réservé au trafic entre un étage d'entrée (30-i) et un noeud d'étage central (50-j) de l'une des m*n connexions logiques bidirectionnelles qui sont mises en correspondance sur la structure en anneau physique (40).

3. Système de communication selon la revendication 2, avec lequel une largeur de bande prédéterminée est attribuée au canal dédié.

4. Système de communication selon les revendications 2 ou 3, avec lequel la structure en anneau physique (40) comprend un canal dédié auquel est attribuée une largeur de bande prédéterminée pour chacune des m*n connexions logiques bidirectionnelles qui sont mises en correspondance sur la structure en anneau physique (40).

5. Système de communication selon l'une quelconque des revendications précédentes, avec lequel le trafic est transmis entre un étage d'entrée (30) et un noeud d'étage central (50) en multiplexant les entités de multiplexage (60 et 80) sur la structure en anneau physique (40).

6. Système de communication selon la revendication 5, avec lequel une combinaison de techniques de multiplexage est utilisée pour multiplexer les entités de multiplexage en utilisant au moins l'un parmi le multiplexage par répartition en longueur d'onde, le multiplexage par répartition dans le temps, le multiplexage dans l'espace ou le multiplexage de rafales optiques.

7. Système de communication selon l'une quelconque des revendications 2, 3 ou 4, avec lequel un canal dédié est mis en oeuvre en utilisant au moins l'un parmi le multiplexage par répartition en longueur d'onde, le multiplexage par répartition dans le temps, le multiplexage dans l'espace ou le multiplexage de rafales optiques.

8. Système de communication selon la revendication 7, avec lequel un premier segment d'un plan de multiplexage de la structure en anneau physique est utilisé pour transporter les entités de multiplexage (60 et 80) d'un étage d'entrée (30-i) à un noeud d'étage central (50-j) particulier et un segment restant du plan de multiplexage de la structure en anneau physique (40) est utilisé pour transporter les entités de multiplexage (60 et 80) du noeud d'étage central (50-j) particulier à l'étage d'entrée (30-i), réalisant ainsi un canal dédié bidirectionnel entre l'étage d'entrée (30-i) et le noeud d'étage central (50-j) particulier.

9. Système de communication selon l'une quelconque des revendications précédentes, avec lequel le système de communication est un système à étagères multiples, les m noeuds d'E/S (10) et les n noeuds d'étage central (50) étant distribués sur au moins une première (70-i) et une deuxième (70-j) étagère, un étage de sortie (30-i) situé dans la première étagère (70-i) étant relié physiquement à un noeud d'étage central (50-j) situé dans la deuxième étagère (70-j) par le biais de la structure en anneau physique (40).

10. Système de communication selon la revendication 9, avec lequel les étages d'entrée (30-i) et les noeuds d'étage central (50) qui sont situés sur la même étagère (70-i) sont reliés localement au niveau de l'étagère sans utiliser la structure en anneau physique (40).

11. Système de communication selon l'une quelconque des revendications précédentes, avec lequel la structure en anneau physique (40) comprend une architecture en anneau contra-directionnelle à double anneau (41, 42).

12. Système de communication selon l'une quelconque des revendications précédentes, avec lequel le système est un parmi un système à commutation de cellules, un système à commutation de paquets ou un système à commutation de TDM ou toute combinaison de ceux-ci.

13. Système de communication selon l'une quelconque des revendications précédentes, avec lequel une capacité de l'entité de multiplexage (60 et 80) est supérieure à une taille d'une entité d'information à commuter et l'entité de multiplexage (60 et 80) comprend des entités d'information destinées à des étages d'entrée (30) destinataires différents, les noeuds d'étage central (50) étant configurés pour décomposer une entité de multiplexage (60 et 80) reçue en les plus petites entités d'information qui y sont contenues et pour attribuer chacune des entités d'information décomposées à différentes entités de multiplexage sortantes, chacune destinée à un étage d'entrée (30) destinataire différent.

14. Système de communication selon l'une quelconque des revendications 1 à 13 précédentes, avec lequel le capacité d'une entité de multiplexage (60 et 80) et inférieure à la taille d'une entité d'information à commuter, le trafic provenant d'un étage d'entrée (30) destiné à un noeud d'étage central (50) étant fractionné et transporté par le biais de plus d'une entité de multiplexage (60 et 80) par le biais de la structure en anneau physique (40).

15. Procédé de commutation du trafic dans un système de communication, le système de communication comprenant une structure en anneau physique (40), une pluralité de m noeuds d'E/S (10), chaque noeud (10) étant doté d'une interface d'E/S (20) comprenant un ou plusieurs ports d'E/S et un étage d'entrée (30), l'étage d'entrée (30) étant relié à la structure en anneau physique (40), et une pluralité de n noeuds d'étage central (50) reliés à la structure en anneau physique (40), chaque étage d'entrée (30) étant relié logiquement à chaque noeud d'étage central (50) et chaque noeud d'étage central (50) étant relié logiquement à chaque étage d'entrée (30), ce qui résulte en m*n connexions logiques bidirectionnelles ; le procédé comprenant les étapes suivantes :
attribution du trafic qui arrive depuis une interface d'E/S (10) au niveau de l'étage d'entrée (30) à des entités de multiplexage (60 et 80) qui peuvent être transportées par le biais de la structure en anneau physique (40) ;
transmission d'entités de multiplexage (60 et 80) entre un étage d'entrée (30) et un noeud d'étage central (50) d'au moins certaines des m*n connexions logiques bidirectionnelles par le biais de la structure en anneau physique (40) ;
la totalité du trafic qui pénètre dans le système à travers l'un des noeuds d'E/S (10) étant acheminée à travers l'un des noeuds d'étage central (50) avant de quitter le système à travers l'un des noeuds d'E/S (10) ; et
un canal dédié étant réservé au trafic qui est transmis par le biais de la structure en anneau physique (40) entre un étage d'entrée (30-i) et un noeud d'étage central (50-j).
